(19) Europäisches Patentamt
European Patent Office
Office européen des brevets

(11) **EP 3 754 385 B1**

(12) **FASCICULE DE BREVET EUROPEEN**

(45) Date de publication et mention
de la délivrance du brevet:
**03.11.2021 Bulletin 2021/44**

(51) Int Cl.:
**G02B 3/04** *(2006.01)* **G02B 27/30** *(2006.01)*
**G02B 19/00** *(2006.01)* **G02B 6/42** *(2006.01)*

(21) Numéro de dépôt: **20180958.9**

(22) Date de dépôt: **18.06.2020**

(54) **DISPOSITIF OPTIQUE DE COLLIMATION**

OPTISCHE BÜNDELUNGSVORRICHTUNG

OPTICAL COLLIMATION DEVICE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **21.06.2019 FR 1906700**

(43) Date de publication de la demande:
**23.12.2020 Bulletin 2020/52**

(73) Titulaire: **Commissariat à l'Energie Atomique et
aux Energies
Alternatives
75015 Paris (FR)**

(72) Inventeur: **LE BLEVENNEC, Gilles
38054 GRENOBLE CEDEX 9 (FR)**

(74) Mandataire: **Cabinet Beaumont
4, Place Robert Schuman
B.P. 1529
38025 Grenoble Cedex 1 (FR)**

(56) Documents cités:
**US-A1- 2002 122 621 US-A1- 2005 047 723
US-A1- 2018 284 472 US-B1- 6 491 443**

## Description

<u>Domaine technique</u>

La présente invention concerne de façon générale les dispositifs optiques de collimation.

<u>Technique antérieure</u>

Pour certaines applications, il est souhaitable de disposer d'un faisceau lumineux sensiblement collimaté, c'est-à-dire que les rayons lumineux du faisceau lumineux sont sensiblement parallèles. C'est le cas notamment pour le transport d'un faisceau lumineux dans un guide d'onde pour garantir une propagation sans perte dans le guide d'onde. Toutefois, de nombreuses sources lumineuses ne produisent pas de la lumière collimatée. C'est le cas par exemple d'une diode électroluminescente qui présente un diagramme d'émission très ouvert, typiquement à 120 °. Il est alors nécessaire de prévoir un dispositif de collimation entre la source lumineuse et le guide d'onde. Un exemple de dispositif de collimation correspond à une lentille de collimation.

De façon générale, le dispositif de collimation comprend une face d'entrée recevant le faisceau lumineux émis par la source lumineuse et une face de sortie fournissant le faisceau collimaté. Les dimensions de la face de sortie du dispositif de collimation sont généralement supérieures aux dimensions de la face d'entrée du guide d'onde de sorte qu'un coupleur optique doit être interposé entre le dispositif de collimation et le guide d'onde pour guider la lumière collimatée émise par la face de sortie du dispositif de collimation jusqu'à la face d'entrée du guide d'onde.

Un inconvénient est que la face de sortie d'une lentille de collimation a généralement une forme courbe tandis que la face d'entrée d'un coupleur optique est généralement plane, de sorte qu'il demeure un interstice entre la lentille de collimation et le coupleur optique, la face de sortie de la lentille de collimation ne pouvant pas être accolée en totalité à la face d'entrée du coupleur optique. Ceci peut rendre complexe le montage du dispositif de collimation et du coupleur optique.

Le document US 2018/0284472 décrit une structure de collimation de lumière, un substrat de collimation de lumière, un procédé de fabrication, un module de rétroéclairage et un dispositif d'affichage.

Le document US 2005/0047723 décrit un guide d'onde optique conique à lentille.

Le document US 2002/0122621 décrit un couplage de lumière depuis une source lumineuse non circulaire.

Le document US 6,491,443 décrit une douille pour connecteur optique et son réceptacle.

<u>Résumé de l'invention</u>

Ainsi, un objet d'un mode de réalisation est de pallier au moins en partie les inconvénients des dispositifs de collimation décrits précédemment.

Un objet d'un mode de réalisation est que la face de sortie du dispositif de collimation soit plane.

Un autre objet d'un mode de réalisation est que le dispositif de collimation peut être accolé à un coupleur optique.

Un mode de réalisation prévoit un système optoélectronique (25) comprenant :

une source lumineuse (S) adaptée à fournir un rayonnement électromagnétique (22) et étant, de préférence, une source lambertienne ;

un dispositif de collimation d'axe D, comprenant une première face destinée à être placée dans un milieu extérieur ayant un premier indice de réfraction $n_1$ et à recevoir ledit rayonnement électromagnétique fourni par ladite source lumineuse située à une distance L de la première face et une deuxième face destinée à fournir le rayonnement électromagnétique collimaté. Le dispositif de collimation est principalement en un premier matériau ayant un deuxième indice de réfraction $n_2$ et la première face est définie par la révolution autour de l'axe D d'un profil défini dans un plan perpendiculaire à l'axe D, chaque point dudit profil étant défini par une abscisse x et une ordonnée y dans un repère dont l'axe des abscisses est contenu dans ledit plan et perpendiculaire à l'axe D et passant par le centre de la première face et l'axe des ordonnées est l'axe D, le profil étant la courbe représentative de la fonction y(x) obtenue, à 10 % près, par intégration numérique de l'équation différentielle donnée par la relation 6) décrite par la suite ;

un coupleur optique (30) d'un deuxième matériau, identique ou différent du premier matériau, au contact de la deuxième face (14), le coupleur optique correspondant à un tronc de cône d'axe D.

Selon un mode de réalisation, la deuxième face est plane.

Selon un mode de réalisation, la deuxième face est perpendiculaire à l'axe D.

Selon un mode de réalisation, le dispositif de collimation comprend une paroi latérale cylindrique d'axe D reliant la première face à la deuxième face.

Selon un mode de réalisation, les première et deuxième faces ont chacune un rayon compris entre 1 mm et 100 mm.

Selon un mode de réalisation, le milieu extérieur est l'air.

Selon un mode de réalisation, la source lumineuse est, de préférence, une source lambertienne.

Selon un mode de réalisation, le dispositif optique et le coupleur optique forment une pièce monobloc.

Selon un mode de réalisation, le système optoélectronique comprend en outre un guide d'onde d'un troisième matériau, identique ou différent du deuxième matériau, au contact du coupleur optique.

Selon un mode de réalisation, le guide d'onde comprend un faisceau de fibres optiques.

Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :

la figure 1 est une vue en coupe, partielle et schématique, d'un mode de réalisation d'un dispositif de collimation recevant un rayonnement émis par une source lumineuse ;

la figure 2 est une vue en coupe, partielle et schématique, illustrant des paramètres géométriques du dispositif de collimation de la figure 1 ;

la figure 3 représente des profils de la face d'entrée du dispositif de collimation pour différentes distances entre la source lumineuse et la face d'entrée ;

la figure 4 représente une vue en coupe, partielle et schématique, d'un dispositif optoélectronique comprenant une source lumineuse, le dispositif de collimation de la figure 1, un coupleur optique et un guide d'onde ;

la figure 5 représente une carte de profil de l'irradiance du rayonnement qui s'échappe par la face de sortie du guide d'onde ;

la figure 6 représente des courbes d'évolution de l'irradiance de la carte de profil de la figure 5 selon deux axes perpendiculaires ;

la figure 7 représente une courbe d'évolution du rendement du dispositif optoélectronique de la figure 4 en fonction des dimensions de la source lumineuse ;

la figure 8 représente une courbe d'évolution du rendement du dispositif optoélectronique de la figure 4 en fonction des variations de la distance entre la source lumineuse et le dispositif de collimation par rapport à une position nominale ;

la figure 9 représente une courbe d'évolution du rendement du dispositif optoélectronique de la figure 4 en fonction d'un écart de la source lumineuse par rapport à l'axe du dispositif de collimation ;

la figure 10 représente une carte de profil de l'irradiance du rayonnement qui s'échappe par la face de sortie du guide d'onde pour une source lumineuse désaxée ;

la figure 11 représente des courbes d'évolution de l'irradiance de la carte de profil de la figure 10 selon deux axes perpendiculaires.

Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques. Par souci de clarté, seuls les éléments utiles à la compréhension des modes de réalisation décrits ont été représentés et sont détaillés. Sauf précision contraire, les expressions "environ", "approximativement", "sensiblement", et "de l'ordre de" signifient à 10 % près, de préférence à 5 % près. Dans le cas où les termes "environ", "approximativement", "sensiblement", et "de l'ordre de" sont utilisés en relation avec une direction ou un angle, ils signifient à 10 ° près, de préférence à 5 ° près.

Dans la suite de la description, on appelle rayonnement utile le rayonnement électromagnétique devant être transmis par le coupleur et on entend par indice de réfraction d'un matériau l'indice de réfraction du matériau à la longueur d'onde du rayonnement utile. A titre d'exemple, il peut s'agir d'un rayonnement dans le spectre visible, l'infrarouge ou les microondes. Lorsque le rayonnement utile n'est pas un rayonnement monochromatique, on considère l'indice de réfraction moyen sur la plage de longueurs d'ondes du rayonnement utile. Dans la suite de la description, on entend par l'expression "un élément principalement en un matériau" que ledit élément comprend en volume plus de 50 % dudit matériau, de préférence plus de 80 % en volume, plus préférentiellement plus de 90 % en volume.

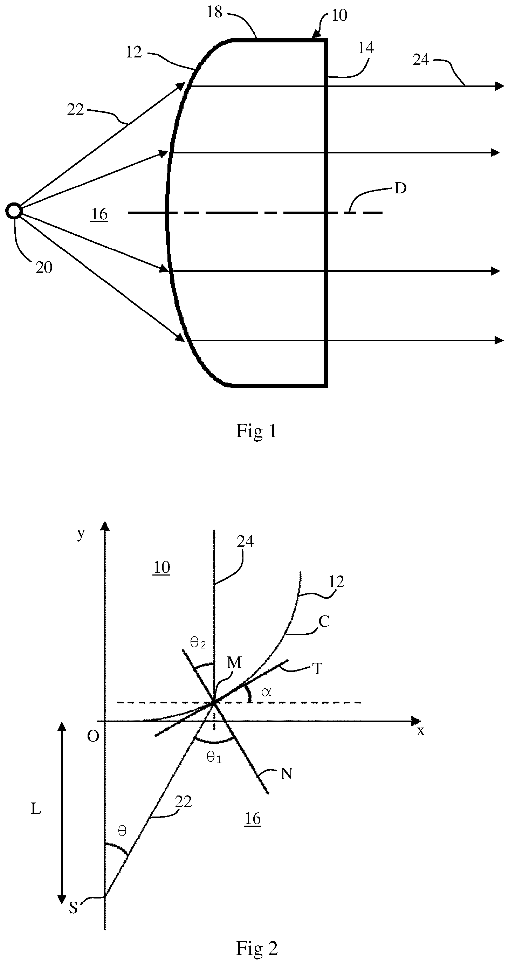

La figure 1 est une vue en coupe schématique représentant un dispositif de collimation 10 d'axe D à base circulaire comprenant une face d'entrée 12 et une face de sortie 14. Selon un mode de réalisation, le dispositif de collimation 10 est à symétrie de révolution autour de l'axe D. Selon un mode de réalisation, la face d'entrée 12 est courbe. Selon un mode de réalisation, la face de sortie 14 est plane et perpendiculaire à l'axe D. La face d'entrée 12 est au contact d'un milieu extérieur 16, par exemple de l'air. Selon un mode de réalisation, le dispositif de collimation 10 comprend une paroi latérale cylindrique 18 à base circulaire pouvant être au contact du milieu extérieur 16 et reliant la face d'entrée 12 à la face de sortie 14. Selon un autre mode de réalisation, la paroi latérale 18 n'est pas présente et la face de sortie 14 est directement reliée à la face d'entrée 12.

On a représenté en outre une source lumineuse 20 en figure 1. La face d'entrée 12 du dispositif de collimation 10 est destinée à recevoir un rayonnement non collimaté, dont certains rayons 22 sont représentés en figure 1, émis par la source lumineuse 20, et à fournir, par la face de sortie 14, un rayonnement sensiblement collimaté, dont des rayons 24 sont représentés en figure 1. A titre d'exemple, la source lumineuse 20 est une diode électroluminescente qui est généralement équivalente à une source lumineuse lambertienne, une source lambertienne étant une source de lumière dont la luminance est uniforme angulairement, c'est-à-dire identique dans toutes les directions.

La figure 2 est une vue en coupe, partielle et schématique, d'une partie du dispositif de collimation illustrant le principe de détermination de la face d'entrée 12 du dispositif de collimation 10. On considère que le milieu extérieur 16 a un indice de réfraction $n_1$ et que le dispositif de collimation 10 a une structure homogène en un matériau ayant un indice de réfraction $n_2$.

On définit, dans le plan de coupe, un repère (Oxy) d'origine O, l'axe (Oy) correspondant à l'axe de révolution D du dispositif de collimation 10 et l'axe (Ox) étant perpendiculaire à l'axe (Oy) et situé dans le plan de coupe de la figure 2. Pour la détermination de la forme de la face d'entrée 12, la source lumineuse S est considérée comme étant une source ponctuelle placée sur l'axe (Oy). La face d'entrée 12 étant à symétrie de révolution autour de l'axe (Oy), il suffit de définir dans le repère (Ox, Oy) la courbe C correspondant au profil de la face d'entrée 12 dans le demi-plan à droite de l'axe (Oy). La courbe C est de préférence obtenue à 10 % près, c'est-à-dire qu'en considérant que la courbe C est représentative d'une fonction y(x), chaque point du profil peut dévier de + ou - 10 % de la valeur de la fonction y(x) à un point x donné.

On appelle :

- L la distance entre la source lumineuse S et l'origine O ;

- (x, y) les coordonnées d'un point M appartenant à la courbe C dans le repère (Oxy) ;

- $\theta$ l'angle entre l'axe (Oy) et la droite (SM) ;

- T la tangente à la courbe C au point M ;

- N la normale à la courbe C au point M ;

- $\alpha$ l'angle entre l'axe (Ox) et la tangente T ;

- $\theta_1$ l'angle entre la droite (MS) et la normale N, c'est-à-dire l'angle d'incidence du rayon lumineux 22 dirigé selon la droite (SM) par rapport au dispositif de collimation 10 ; et

- $\theta_2$ l'angle entre la normale N et le rayon 24, c'est-à-dire l'angle de réfraction du rayon incident 22 par rapport à la face d'entrée 12.

Les angles $\theta_1$ et $\theta_2$ sont liés par la loi de Snell-Descartes selon la relation 1) suivante :

[Math 1]

$$n_1 \sin \theta_1 = n_2 \sin \theta_2$$

Il est recherché une collimation du rayonnement incident. Les angles $\alpha$ et $\theta_2$ sont liés par la relation 2) suivante :

[Math 2]

$$\alpha = \theta_2$$

La distance L, l'angle $\theta$ et les coordonnées (x, y) du point M sont liés par la relation 3) suivante :

[Math 3]

$$\tan \theta = \frac{x}{y+L}$$

Les angles $\theta_1$, $\theta$ et $\alpha$ sont liés par la relation 4) suivante :

[Math 4]

$$\theta_1 = \theta + \alpha$$

En outre, la pente de la tangente T est égale à l'angle $\alpha$, ce qui se traduit par la relation 5) suivante :

[Math 5]

$$y'(x) = \tan \alpha$$

En combinant les relations 1) à 5) précédentes et en utilisant l'approximation aux petits angles, on obtient une équation différentielle selon la relation 6) suivante :

[Math 6]

$$y'(x) = n_1 (x/(y+L))/(n_2 - n_1(x/(y+L))^2)$$

On considère que la face d'entrée 12 passe par le point O et que la tangente à la face d'entrée 12 au point O correspond à l'axe (Ox). Ceci se traduit par les conditions initiales données par les relations 7) suivantes :

[Math 7]

$$y(0) = 0 \text{ et } y'(0) = 0$$

Dans le cas où le milieu extérieur 16 est l'air, ce qui correspond à l'indice de réfraction $n_1$ égal à 1, et que le dispositif de collimation 10 est en poly(méthacrylate de méthyle) (PMMA), ce qui correspond à l'indice de réfraction $n_2$ égal à 1,5, une intégration numérique de l'équation différentielle selon la relation 6) est donnée par la relation 8) suivante :

[Math 8]

$$y(x) = \frac{6^{\frac{1}{2}}((x^4 + 22500)^{\frac{1}{2}} + x^2)^{1/2}}{3} - 10$$

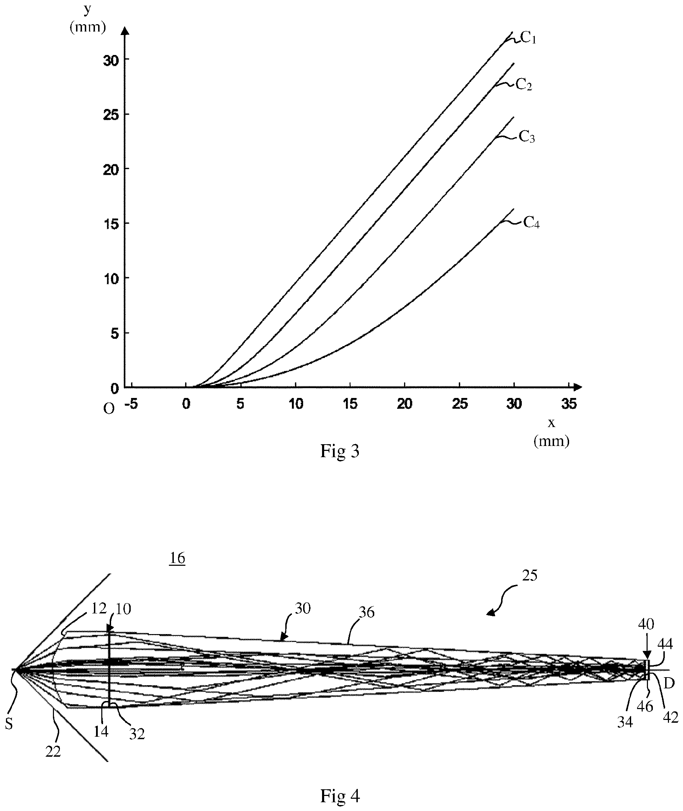

La figure 3 représente des courbes $C_1$, $C_2$, $C_3$ et $C_4$ de profil de la face d'entrée 12 déterminées à partir de la relation 8) précédente dans le cas où la distance L entre la source lumineuse S et le centre O de la face d'entrée 12 est égale respectivement à 2 mm, 5 mm, 10 mm et 20 mm.

La figure 4 est une vue en coupe schématique d'un système optoélectronique 25 comprenant le dispositif de collimation 10 représenté en figure 1 associé à un coupleur optique 30 tronconique à base circulaire au contact d'un guide d'onde 40 cylindrique à base circulaire. La forme du coupleur optique 30 est donnée à titre d'exemple, le coupleur optique 30 pouvant avoir une autre forme que celle représentée en figure 4. La forme de la face d'entrée 12 du dispositif de collimation 10 est déterminée comme cela a été décrit précédemment.

Le coupleur optique 30 comprend une face d'entrée 32 qui est accolée à la face de sortie 14 du dispositif de collimation 10 et une face de sortie 34 au contact du guide d'onde 40. Les faces d'entrée 32 et de sortie 34 du coupleur optique 30 sont perpendiculaires à l'axe D. Le coupleur optique 30 comprend une paroi latérale tronconique 36, au contact du milieu extérieur 16, reliant la face d'entrée 32 à la face de sortie 34. Le coupleur optique 30 peut être du même matériau que le dispositif de collimation 10 ou en un autre matériau que celui du dispositif de collimation 10. Selon un autre mode de réalisation, le dispositif de collimation 10 et le coupleur optique 30 peuvent correspondre à une pièce monobloc.

Le guide d'onde 40 comprend une face d'entrée 42 plane accolée à la face de sortie 34 du coupleur optique et une face de sortie 44 plane, opposée à la face d'entrée 42 et perpendiculaire à l'axe D. Le guide d'onde 40 comprend une paroi latérale cylindrique 46, au contact du milieu extérieur 16, reliant la face d'entrée 42 à la face de sortie 44. Le guide d'onde 40 peut être du même matériau que le coupleur optique 30 ou en un autre matériau que celui du coupleur optique 30. Selon un mode de réalisation, le guide d'onde 40 peut correspondre à un faisceau de fibres optiques.

La figure 4 représente les parcours de rayons lumineux déterminés par simulation. La face d'entrée 12 suivait le profil C3 de la figure 3. La face de sortie 14 était plane. La face d'entrée 32 et la face de sortie 34 du coupleur optique 30 étaient planes et la longueur du coupleur optique 10 mesurée selon l'axe D était de 158 mm. Pour les simulations représentées en figure 4, la source lumineuse S était une source circulaire de 0,2 mm de diamètre centrée sur l'axe D et perpendiculaire à l'axe D à une distance L du point O, c'est-à-dire une source lumineuse quasi-ponctuelle. La distance L était égale à 10 mm. De plus, pour les simulations, le dispositif de collimation 10, le coupleur optique 30 et le guide d'onde 40 étaient en PMMA et le milieu extérieur 16 était de l'air. Comme cela apparaît sur la figure 4, les rayons lumineux émis par la source lumineuse S sont sensiblement collimatés par le dispositif de collimation 10 et sont guidés par le coupleur optique 30 jusqu'au guide d'onde 40.

Comme cela apparaît sur la figure, les rayons lumineux émis par la source lumineuse S ne sont pas parfaitement collimatés par le dispositif de collimation 10. Cela est dû aux approximations effectuées pour déterminer la forme de la face d'entrée 12 et au fait que la source lumineuse S n'est pas parfaitement ponctuelle.

Le dispositif de collimation 10 présente de façon avantageuse une forme simple et peut être facilement fabriqué, par exemple par moulage ou par usinage.

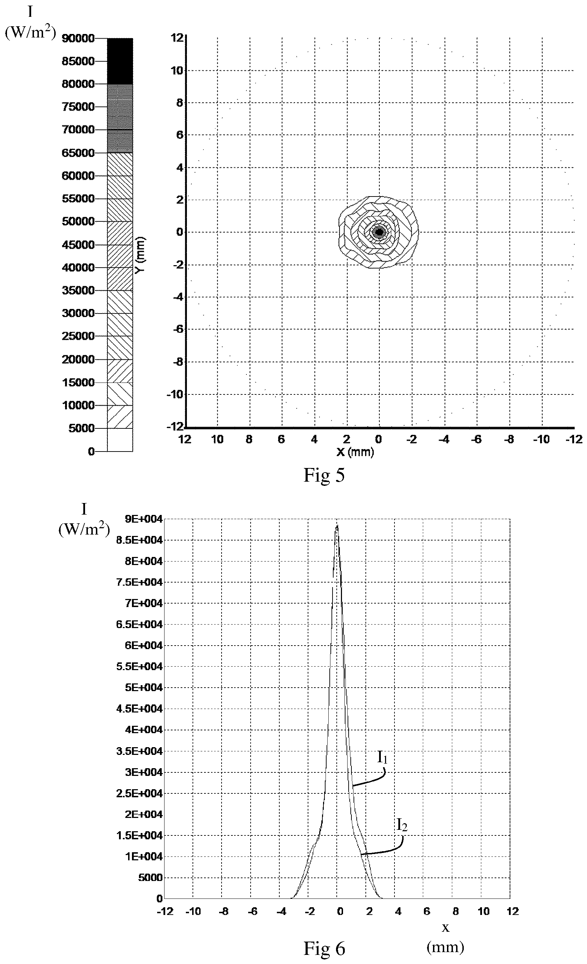

La figure 5 représente une carte de profil, obtenue par simulation, de l'irradiance I du rayonnement qui s'échappe par la face de sortie 44 du guide d'onde 40 de la figure 4 dans le plan de la face de sortie 44 et la figure 6 représente des courbes d'évolution $I_1$ et $I_2$ de l'irradiance I dans le plan de la face de sortie 44 selon deux axes perpendiculaires.

Les dimensions du dispositif de collimation 10, du coupleur optique 30 et du guide d'onde 40 pour les figures 5 et 6 sont celles indiquées précédemment pour la simulation représentée en figure 4 à la différence que la source lumineuse S ponctuelle est une source circulaire de 3 mm de diamètre centrée sur l'axe D et perpendiculaire à l'axe D à une distance L du point O. Le fait que les courbes $I_1$ et $I_2$ ne soient pas parfaitement confondues et que la carte de profil de l'irradiance ne soit pas parfaitement à symétrie de révolution est dû aux approximations effectuées pour déterminer la forme de la face d'entrée 12 et à la statistique de lancer de rayons.

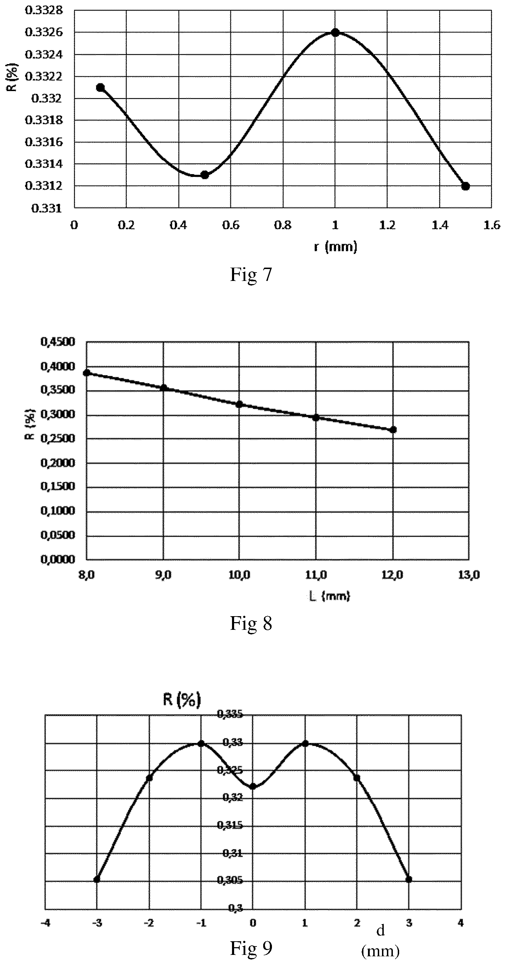

La figure 7 représente une courbe d'évolution du rendement R du système optoélectronique 25 en fonction du rayon r de la source lumineuse S. Le rendement R correspond au rapport entre le flux du rayonnement atteignant la face d'entrée 12 du dispositif de collimation 10 et le flux du rayonnement s'échappant de la face de sortie 44 du guide d'onde 40. Le rendement R reste sensiblement égal à 33 %, ce qui est dû aux pertes avant réception par la face d'entrée 12 du dispositif de collimation 10. Le rendement R reste donc sensiblement constant indépendamment des dimensions de la source lumineuse S. Ceci signifie que les rayons restent suffisamment collimatés par le dispositif de collimation 10 indépendamment des dimensions de la source lumineuse S.

La figure 8 représente une courbe d'évolution du rendement R du système optoélectronique 25 en faisant varier la distance L de la source lumineuse S par rapport au point O, la forme de la face d'entrée 12 du dispositif de collimation ayant été déterminée pour une distance L égale à 10 mm. On observe une variation du rendement R due à l'étendue géométrique du faisceau intercepté par le dispositif de collimation 10 et aux effets liés à la variation des coefficients de réflexion sur la face d'entrée 12. Plus la source lumineuse S est proche de la face d'entrée 12 du dispositif de collimation 10, plus la quantité de lumière injectée dans le guide d'onde 40 est grande.

La figure 9 représente une courbe d'évolution du rendement R du système optoélectronique 25 en fonction de la distance d de la source lumineuse S par rapport à l'axe D, la source lumineuse S restant dans un plan perpendiculaire à l'axe D à la distance L du point O. Le rendement R reste sensiblement stable jusqu'à des écarts par rapport à l'axe D de 2 mm à 3 mm.

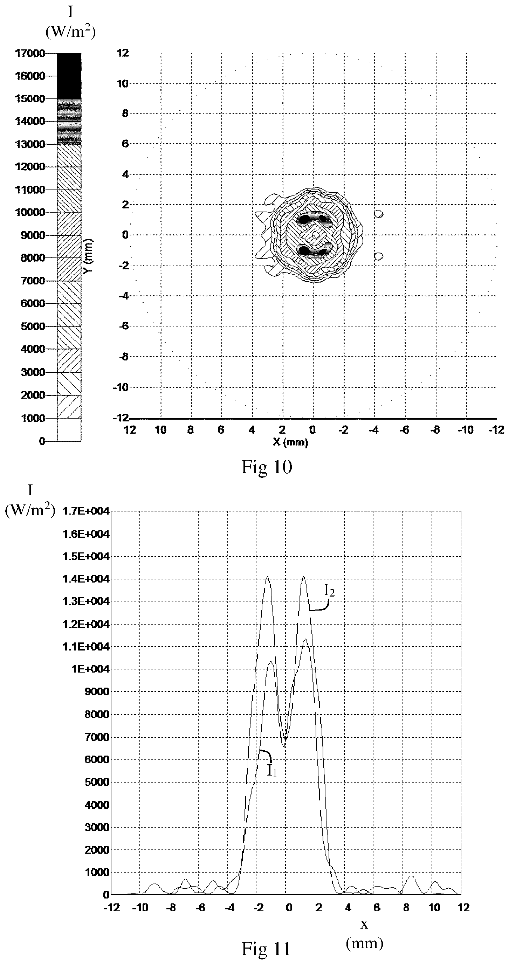

La figure 10 représente une carte de profil, obtenue par simulation, de l'irradiance I du rayonnement qui s'échappe par la face de sortie du guide d'onde 40 de la figure 4 dans le plan de la face de sortie 44 et la figure 11 représente des courbes d'évolution $I_1$ et $I_2$ de l'irradiance I dans le plan de la face de sortie 44 selon deux axes perpendiculaires dans le cas où la source est décalée de 3 mm par rapport à l'axe D selon l'axe de mesure de courbe $I_1$. La carte de profil de la figure 10 est légèrement décentrée par rapport à la carte de profil de la figure 5.

Divers modes de réalisation et variantes ont été décrits. L'homme de l'art comprendra que certaines caractéristiques de ces divers modes de réalisation et variantes pourraient être combinées, et d'autres variantes apparaîtront à l'homme de l'art. Enfin, la mise en oeuvre pratique des modes de réalisation et variantes décrits est à la portée de l'homme du métier à partir des indications fonctionnelles données ci-dessus.

**Revendications**

1. Système optoélectronique (25) comprenant :

   une source lumineuse (S) adaptée à fournir un rayonnement électromagnétique (22) et étant, de préférence, une source lambertienne ;
   un dispositif de collimation (10) d'axe D, comprenant une première face (12) destinée à être placée dans un milieu extérieur (16) ayant un premier indice de réfraction $n_1$ et à recevoir ledit rayonnement électromagnétique (22, 24) fourni par ladite source lumineuse (S) située à une distance L de la première face et une deuxième face (14) destinée à fournir le rayonnement électromagnétique collimaté, le dispositif de collimation étant principalement en un premier matériau ayant un deuxième indice de réfraction $n_2$ et la première face (12) étant définie par la révolution autour de l'axe D d'un profil (C) défini dans un plan perpendiculaire à l'axe D, chaque point dudit profil étant défini par une abscisse x et une ordonnée y dans un repère dont l'axe des abscisses est contenu dans ledit plan et perpendiculaire à l'axe D et passant par le centre de la première face et l'axe des ordonnées est l'axe D, le profil étant la courbe représentative de la fonction y(x) obtenue, à 10 % près, par intégration numérique de l'équation différentielle suivante :

$$y'(x)=n_1\,(x/(y+L))/(n_2-n_1(x/(y+L))^2)\ \ ;$$

   et
   un coupleur optique (30) d'un deuxième matériau, identique ou différent du premier matériau, au contact de la deuxième face (14), le coupleur optique correspondant à un tronc de cône d'axe D.

2. Système optoélectronique selon la revendication 1, dans lequel la deuxième face (14) est plane.

3. Système optoélectronique selon la revendication 1 ou 2, dans lequel la deuxième face (14) est perpendiculaire à l'axe D.

4. Système optoélectronique selon l'une quelconque des revendications 1 à 3, dans lequel le dispositif de collimation (10) comprend une paroi latérale cylindrique (18) d'axe D reliant la première face (12) à la deuxième face (14).

5. Système optoélectronique selon l'une quelconque des revendications 1 à 4, dans lequel les première et deuxième faces (12, 14) ont chacune un rayon compris entre 1 mm et 100 mm.

6. Système optoélectronique selon l'une quelconque des revendications 1 à 5, dans lequel le milieu extérieur (16) est l'air.

7. Système optoélectronique selon l'une quelconque des revendications 1 à 6, dans lequel la source lumineuse est une source lambertienne.

8. Système optoélectronique selon l'une quelconque des revendications 1 à 7, dans lequel le dispositif optique (10) et le coupleur optique (30) forment une pièce monobloc.

9. Système optoélectronique selon l'une quelconque des revendications 1 à 8, comprenant en outre un guide d'onde (40) d'un troisième matériau, identique ou différent du deuxième matériau, au contact du coupleur optique (30).

**10.** Système optoélectronique selon la revendication 9, dans lequel le guide d'onde (16) comprend un faisceau de fibres optiques.

**Patentansprüche**

**1.** Ein optoelektronisches System (25), das Folgendes aufweist:

eine Lichtquelle (S), die geeignet ist, eine elektromagnetische Strahlung (22) abzugeben, und vorzugsweise eine Lambert'sche Quelle ist;
eine Kollimationsvorrichtung (10) einer Achse D, wobei die Kollimationsvorrichtung eine erste Fläche (12) aufweist, die dazu bestimmt ist, in einem äußeren Medium (16) mit einem ersten Brechungsindex $n_1$ angeordnet zu werden und die von der Lichtquelle (S) abgegebene elektromagnetische Strahlung (22, 24) zu empfangen, wobei sich die Lichtquelle (S) in einem Abstand L von der ersten Fläche befindet, und eine zweite Fläche (14) aufweist, die dazu bestimmt ist, die kollimierte elektromagnetische Strahlung abzugeben, wobei die Kollimationsvorrichtung hauptsächlich aus einem ersten Material mit einem zweiten Brechungsindex $n_2$ besteht und die erste Fläche (12) durch die Umdrehung eines Profils (C) um die Achse D definiert ist, wobei das Profil in einer Ebene senkrecht zur Achse D definiert ist, wobei jeder Punkt des Profils durch eine Abszisse x und eine Ordinate y in einem Bezugssystem definiert ist, dessen Abszissenachse in der Ebene und senkrecht zur Achse D liegt und durch den Mittelpunkt der ersten Fläche verläuft und dessen Ordinatenachse die Achse D ist, wobei das Profil die Kurve ist, die für die Funktion y(x) repräsentativ ist, die mit einer Genauigkeit von 10% durch digitale Integration der folgenden Differentialgleichung erhalten wird:

[Math 9]

$$y'(x) = n_1\,(x/(y+L))/(n_2 - n_1\,(x/(y+L))^2)$$,

und
einen optischen Koppler (30) aus einem zweiten Material, das mit dem ersten Material identisch oder davon verschieden ist, in Kontakt mit der zweiten Fläche (14), wobei der optische Koppler einem Kegelstumpf auf der Achse D entspricht.

**2.** Optoelektronisches System nach Anspruch 1, wobei die zweite Fläche (14) eben ist.

**3.** Optoelektronisches System nach Anspruch 1 oder 2, wobei die zweite Fläche (14) senkrecht zur Achse D liegt.

**4.** Optoelektronisches System nach einem der Ansprüche 1 bis 3, wobei die Kollimationsvorrichtung (10) eine zylindrische Seitenwand (18) mit der Achse D aufweist, die die erste Fläche (12) mit der zweiten Fläche (14) verbindet.

**5.** Optoelektronisches System nach einem der Ansprüche 1 bis 4, wobei die erste und die zweite Oberfläche (12, 14) jeweils einen Radius im Bereich von 1 mm bis 100 mm aufweisen.

**6.** Optoelektronisches System nach einem der Ansprüche 1 bis 5, wobei das äußere Medium (16) Luft ist.

**7.** Optoelektronisches System nach einem der Ansprüche 1 bis 6, wobei die Lichtquelle (S) eine Lambert'sche Quelle ist.

**8.** Optoelektronisches System nach einem der Ansprüche 1 bis 7, wobei die optische Vorrichtung (10) und der optische Koppler (30) einstückig ausgebildet sind.

**9.** Optoelektronisches System nach einem der Ansprüche 1 bis 8, ferner mit einem Wellenleiter (40) aus einem dritten Material, das mit dem zweiten Material identisch oder davon verschieden ist, in Kontakt mit dem optischen Koppler (30).

**10.** Optoelektronisches System nach Anspruch 9, wobei der Wellenleiter (16) ein Bündel von optischen Fasern aufweist.

**Claims**

1. An optoelectronic system (25) comprising:

   a light source (S) being capable of delivering an electromagnetic radiation (22) and being preferably a lambertian source;
   a collimation device (10) of axis D, comprising a first surface (12) intended to be placed in an outer medium (16) having a first refraction index $n_1$ and to receive said electromagnetic radiation (22, 24) delivered by said light source (S) located at a distance L from the first surface and a second surface (14) intended to deliver the collimated electromagnetic radiation, the collimation device being mainly made of a first material having a second refraction index $n_2$ and the first surface (12) being defined by the revolution around axis D of a profile (C) defined in a plane perpendicular to axis D, each point of said profile being defined by an abscissa x and an ordinate y in a reference frame having its axis of abscissas contained in said plane and perpendicular to axis D and running through the center of the first surface and its axis of ordinates being axis D, the profile being the curve representative of the function y(x) obtained, to within 10%, by digital integration of the following differential equation:

   [Math 9]

   $$y'(x)=n_1(x/(y+L))/(n_2-n_1(x/(y+L))^2) ;$$

   an optical coupler (30) made of a second material, identical or different from the first material, in contact with the second surface (14), the optical coupler corresponding to a frustum of axis D.

2. The optoelectronic system according to claim 1, wherein the second surface (14) is planar.

3. The optoelectronic system according to claim 1 or 2, wherein the second surface (14) is perpendicular to axis D.

4. The optoelectronic system according to any of claims 1 to 3, wherein the collimation device (10) comprises a lateral cylindrical wall (18) of axis D coupling the first surface (12) to the second surface (14).

5. The optoelectronic system according to any of claims 1 to 4, wherein the first and second surfaces (12, 14) each have a radius in the range from 1 mm to 100 mm.

6. The optoelectronic system according to any of claims 1 to 5, wherein the outer medium (16) is air.

7. The optoelectronic system according to any of claims 1 to 6, wherein the light source (S) is a lambertian source.

8. The optoelectronic system according to any of claims 1 to 7, wherein the optical device (10) and the optical coupler (30) form a monoblock part.

9. The optoelectronic system according to any of claims 1 to 8, further comprising a waveguide (40) made of a third material, identical or different from the second material, in contact with the optical coupler (30).

10. The optoelectronic system according to claim 9, wherein the waveguide (16) comprises a bundle of optical fibers.

Fig 1

Fig 2

Fig 3

Fig 4

Fig 5

Fig 6

Fig 7

Fig 8

Fig 9

Fig 10

Fig 11

**EP 3 754 385 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20180284472 A
- US 20050047723 A
- US 20020122621 A
- US 6491443 B